# EUROPEAN PATENT APPLICATION

(11) **EP 4 730 494 A1**
(43) Date of publication of application: **22.04.2026**
(21) Application number: 25200235.7
(22) Date of filing: 04.09.2025
(51) Int. Cl.: H01M 50/103, H01M 50/119, H01M 50/186, H01M 50/197, H01M 50/636

(54) **SECONDARY BATTERY WITH SHORTENED ELECTROLYTE IMPREGNATION PATH AND MANUFACTURING METHOD THEREOF**

(30) Priority: 10.09.2024 KR 20240123570
(71) Applicant: SAMSUNG SDI CO., LTD., Yongin-si, Gyeonggi-do 17084 (KR)
(72) Inventor: SEONG, Jaeil, 17084 Yongin-si (KR)
(74) Representative: Marks & Clerk LLP

(57) **Abstract**

A secondary battery, including an electrode assembly including a plurality of electrode plates, a battery can accommodating the electrode assembly, the battery can having a first surface corresponding to a side portion of the electrode assembly and a second surface corresponding to a surface of one of the plurality of electrode plates of the electrode assembly, and at least one injection hole in the second surface of the battery can.

## Description

### BACKGROUND

### 1. Field

The present disclosure relates to a secondary battery with a shortened electrolyte impregnation path and a manufacturing method thereof.

### 2. Description of Related Art

Secondary batteries are batteries that can be charged and discharged, unlike primary batteries that cannot be charged. In general, a secondary battery includes an electrode assembly composed of a positive electrode plate, a negative electrode plate, and a separator, and an outer member (battery can or case) that accommodates the electrode assembly. The electrode assembly can be classified as a winding type and a stack type depending on the formation of the electrode plates and the separators. The winding type may be called a jelly roll, and the stack type may be called a stack. In addition, the secondary battery can be classified as a pouch type, a cylindrical type, a prismatic type, and the like depending on a material and shape of the outer member.

The above information disclosed in this Background section is for enhancement of understanding of the background of the present disclosure, and therefore, it may contain information that does not constitute a related (or prior) art.

### SUMMARY

Embodiments include a secondary battery, including an electrode assembly including a plurality of electrode plates, a battery can accommodating the electrode assembly, the battery can having a first surface corresponding to (e.g., facing or aligning with) a side portion of the electrode assembly and a second surface corresponding to (e.g., facing or aligning with) a (e.g., main) surface of one of the plurality of electrode plates of the electrode assembly, and at least one injection hole in the second surface of the battery can.

The first surface of the battery can may be a narrow surface compared to a second surface, and the second surface of the battery can may be a wide surface compared to the first surface.

The battery can may include a stainless steel (SUS) material.

A thickness of at least the second surface of the battery can ranges from 0.1 mm to 1 mm.

A diameter of the at least one injection hole may be 50 µm or less.

The secondary battery may further include an injection hole sealing member including a first adhesive part adhered to the battery can in an area including the injection hole, the sealing member sealing the injection hole.

The injection hole sealing member may include a first welding part welded to the battery can in an area surrounding the first adhesive part.

The injection hole sealing member may further include a second adhesive part adhered to the battery can in an area surrounding the first welding part.

The injection hole sealing member may further include a second welding part welded to the battery can in an area surrounding the second adhesive part.

The first adhesive part of the injection hole sealing member may include a heat-resistant material, the first adhesive part having an adhesive surface adhered to the battery can, and the first welding part of the injection hole sealing member may include a metal material welded to the battery can.

The first welding part of the injection hole sealing member may include an ultrasonic welding part.

Embodiments include a method of manufacturing a secondary battery, the method including providing an electrode assembly including a plurality of electrode plates, providing a battery can having a first surface corresponding to (e.g., facing or aligning with) a side portion of the electrode assembly and a second surface corresponding to (e.g., facing or aligning with) a (e.g., main) surface of the electrode plate of the electrode assembly and having at least one injection hole formed in the second surface, assembling the electrode assembly with the battery can and injecting an electrolyte through the injection hole, and sealing the injection hole using an injection hole sealing member.

Sealing the injection hole using the injection hole sealing member may include adhering a first adhesive part to the battery can in an area including the injection hole, and welding a first welding part to the battery can in an area surrounding the first adhesive part.

Sealing the injection hole using the injection hole sealing member may further include adhering a second adhesive part to the battery can in an area surrounding the first welding part.

Sealing the injection hole using the injection hole sealing member may further include welding a second welding part to the battery can in an area surrounding the second adhesive part.

The first welding part may include an ultrasonic welding part.

Embodiments include a secondary battery injection hole sealing member, including a first adhesive part adhered to a battery can in an area including an injection hole for electrolyte injection in the battery can, a first welding part welded to the battery can in an area surrounding the first adhesive part, and a second adhesive part adhered to the battery can in an area surrounding the first welding part.

The secondary battery injection hole sealing member may further include a second welding part welded to the battery can in an area surrounding the second adhesive part.

Each of the first adhesive part and the second adhesive part of the injection hole sealing member may include a heat-resistant material, the injection hole sealing member having an adhesive surface adhered to the battery can, and the first welding part of the injection hole sealing member may include a metal material welded to the battery can.

The first welding part may include an ultrasonic welding part.

At least some of the above and other features of the invention are set out in the claims.

Aspects and features of the present disclosure are not limited to those described above, and other aspects and features not specifically mentioned herein will be clearly understood by those of ordinary skill in the art from the description of the present disclosure below.

### BRIEF DESCRIPTION OF THE DRAWINGS

Features will become apparent to those of ordinary skill in the art by describing in detail example embodiments with reference to the attached drawings, in which:
FIGS. 1 and 2 schematically show an electrode assembly of a secondary battery according to one or more embodiments of the present disclosure;
FIG. 3 is a perspective view showing the exterior of a prismatic secondary battery according to one or more embodiments;
FIG. 4 is an example view of a detailed configuration of an electrolyte injection part according to one or more embodiments;
FIG. 5 shows the secondary battery according to one or more embodiments of the present disclosure;
FIG. 6 shows a secondary battery according to one or more other embodiments of the present disclosure;
FIG. 7 shows a usage state of an injection hole sealing member for sealing an injection hole;
FIG. 8 is a perspective view of the exterior of the injection hole sealing member according to one or more embodiments of the present disclosure;
FIG. 9 is a partial cross-sectional view of the injection hole sealing member according to one or more embodiments of the present disclosure;
FIG. 10 is a cross-sectional view showing a state in which the injection hole sealing member seals the injection hole;
FIG. 11 shows that the injection hole sealing member is applied to each injection hole of a battery can;
FIG. 12 shows an injection hole sealing member according to another embodiment of the present disclosure;
FIG. 13 shows an injection hole sealing member according to still another embodiment of the present disclosure;
FIG. 14 shows an injection hole sealing member according to yet another embodiment of the present disclosure;
FIG. 15 is an example view of a secondary battery module in which secondary batteries manufactured according to the present disclosure are arranged;
FIG. 16 is an example view of a secondary battery pack; and
FIG. 17 is a view for describing a vehicle including the secondary battery pack.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

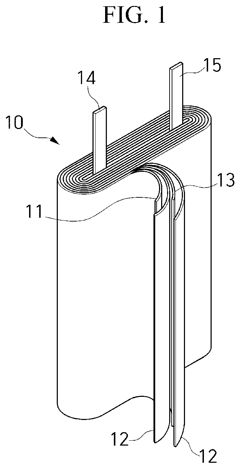

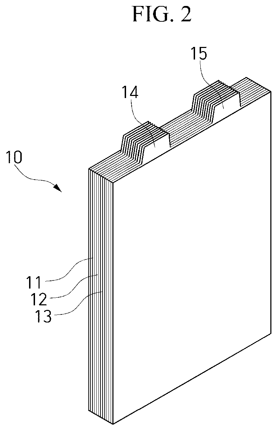

FIGS. 1 and 2 schematically show an electrode assembly of a secondary battery according to one or more embodiments of the present disclosure; FIG. 1 shows a wound type electrode assembly, and FIG. 2 shows a stacked type electrode assembly.

Referring to FIG. 1, an electrode assembly 10 may be formed by winding or stacking a stack of a first electrode plate 11, a separator 12, and a second electrode plate 13, each of which are formed as thin plates or sheets. The electrode assembly 10 may be a wound type as shown in FIG. 1 or a stacked type as shown in FIG. 2, but the shapes of the electrode assembly 10 may vary. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged or arrayed) such that long sides of the electrode assemblies are adjacent to each other and accommodated in a case (e.g., a battery can), and the number of electrode assemblies in a case may vary. The first electrode plate 11 of the electrode assembly may act as a negative electrode, and the second electrode plate 13 may act as a positive electrode. Of course, the reverse is also possible.

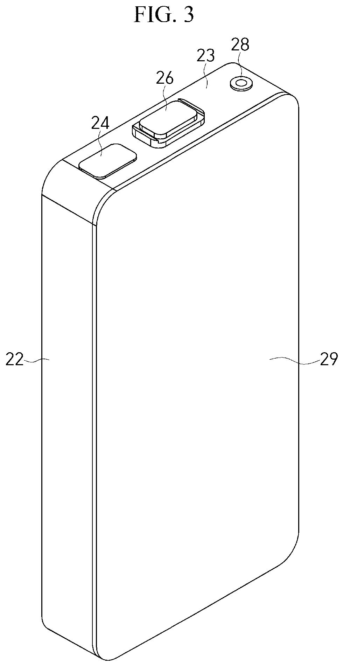

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal (see FIGS. 3A and 3B). In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal (see FIGS. 3A and 3B). In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

In some embodiments, the electrode assembly 10 may be accommodated in a case along with an electrolyte. In a pouch-type secondary battery, an electrode assembly 10 may be accommodated in a pouch made of flexible material. In a cylindrical or prismatic secondary battery, an electrode assembly 10 may be accommodated in a cylindrical or prismatic metal can or case.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on (e.g., applied to) the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al), but the material of the substrate may vary.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one or more embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 3 is a perspective view showing the exterior of a prismatic secondary battery according to one or more embodiments.

A battery can of the secondary battery shown here is a substantially rectangular parallelepiped and includes first surfaces 22 corresponding to side portions of a built-in (e.g., accommodated) electrode assembly (see FIGS. 1 and 2), second surfaces 29 corresponding to electrode plate surfaces of the electrode assembly, and an upper surface 23 corresponding to an upper portion of the electrode assembly. In FIG. 3, the first surfaces 22 are two relatively narrow surfaces opposite to each other, and the second surfaces 29 are two relatively wide surfaces opposite to each other. In addition, a surface opposite to the upper surface 23 is a lower surface.

A first terminal 24 and a second terminal 26 positioned on the upper surface 23 of the battery may be electrically connected to a first electrode tab 14 and a second electrode tab 15 of an electrode assembly 10 (see FIGS. 1 and 2) accommodated inside the battery can, respectively. In addition, although not shown, a vent that is opened due to gas generated inside the battery and degasses the gas may be formed at any position of the battery can.

According to some embodiments, one of the second surfaces 29 opposite to each other may be manufactured separately from the other surfaces, that is, the first surface 22, the upper surface 23, and the lower surface, and covered and bonded after the electrode assembly is assembled. However, other steps are possible.

An electrolyte injection part 28 is formed on the upper surface 23 of the battery can. After the electrode assembly is accommodated in the battery can, an electrolyte may be injected through the electrolyte injection part 28. After the electrolyte is injected, subsequent processes such as aging and pre-charging may be performed.

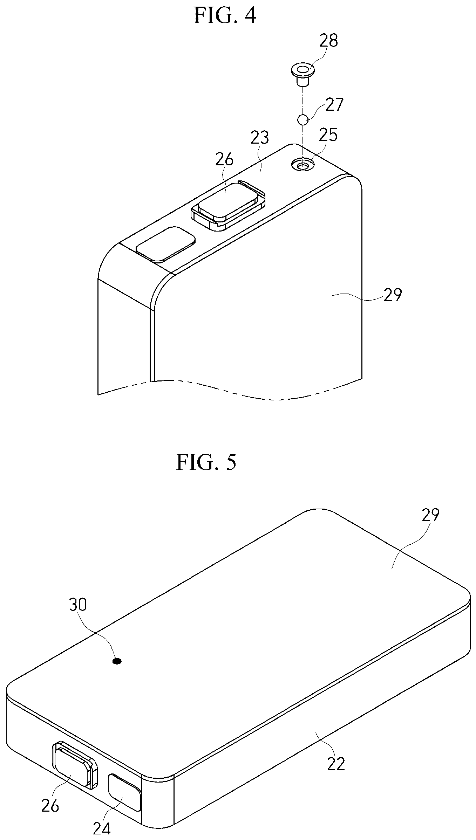

Hereinafter, an attitude of the secondary battery shown in FIG. 3, which is upright so that a posture in which the first and second terminals 24 and 26 exposed externally are disposed to face upward (in the orientation shown), is defined as an "upright state." In addition, as shown in FIG. 5 and drawings thereafter, a posture in which the wide second surface 29 is disposed to face upward is defined as a "lying state."

FIG. 4 is an example view of a detailed configuration of an electrolyte injection part. According to this example, the electrolyte injection part may be composed of an injection hole 25 formed by perforating the upper surface 23 of the battery can for electrolyte injection, a sealing member 27 that blocks the injection hole 25, and a sealing plug welded to the can to finally seal the injection hole 25.

As shown in FIGS. 3 and 4, when the electrolyte is injected through the electrolyte injection part in the upright state of the secondary battery, an impregnation path (path through which the electrolyte moves and penetrates between electrode plates inside the electrode assembly) is long from the upper surface 23 to the lower surface, and thus an impregnation time of the electrode assembly may be increased and complete impregnation of the electrode plates may become difficult.

FIG. 5 shows the secondary battery according to one or more embodiments of the present disclosure. As described above, the battery can is in the lying state.

According to some embodiments of the present disclosure, the injection hole 30 may be formed in the second surface 29 corresponding to the electrode plate surface of the electrode assembly accommodated in the battery can. When the electrolyte is injected through the injection hole 30 in the lying state of the battery can in this way, the electrolyte impregnation path may be greatly reduced to a short width of the first surface 22, thereby shortening the impregnation time of the electrode plates of the electrode assembly and increasing the impregnation property.

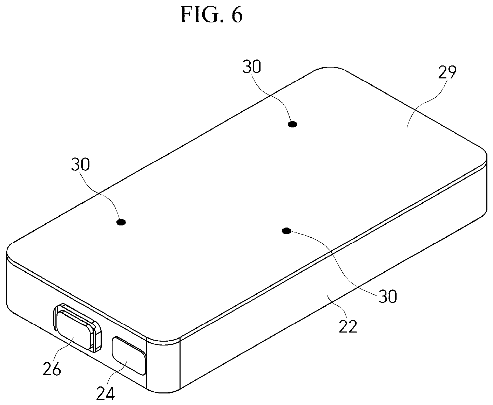

FIG. 6 shows a secondary battery according to another embodiment of the present disclosure and shows an example in which three injection holes 30 shown in FIG. 5 are formed. In this case, since the electrolyte may be injected at multiple positions, the impregnation time of the electrode plates of the electrode assembly can be further shortened and the impregnation property can be further increased. FIG. 6 shows an example in which three injection holes 30 are formed, but the number of injection holes may vary.

In some embodiments, the battery may be formed of a metal such as stainless steel (SUS), aluminum, an aluminum alloy, or nickel-plated steel.

In some embodiments, a thickness of each surface forming the battery can may be about 0.1 mm but the thickness may vary. For example, a thickness of the second surface 29 may be about 0.1 mm, and the other surfaces may be thicker than the second surface 29.

In some embodiments, a diameter of the injection hole 30 may be about 50 µm or less, but preferably, may be about 20 µm or less. The diameter of the injection hole 30 has a correlation with the number of injection holes. For example, the diameter of each injection hole 30 in the case of FIG. 6 may be smaller than the diameter of the injection hole 30 in the case of FIG. 5.

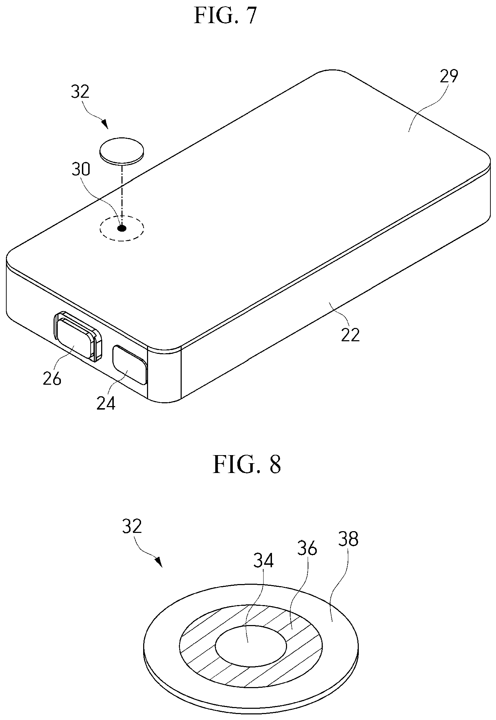

FIG. 7 shows a usage state of an injection hole sealing member 32 for sealing an injection hole 30.

Since the injection hole 30 has a relatively small diameter, the injection hole sealing member 32 may be manufactured in the form of an adhesive tape as shown in FIG. 7. However, the injection hole sealing member 32 is manufactured in a structure for completely blocking leakage of the electrolyte and gas inside the battery can.

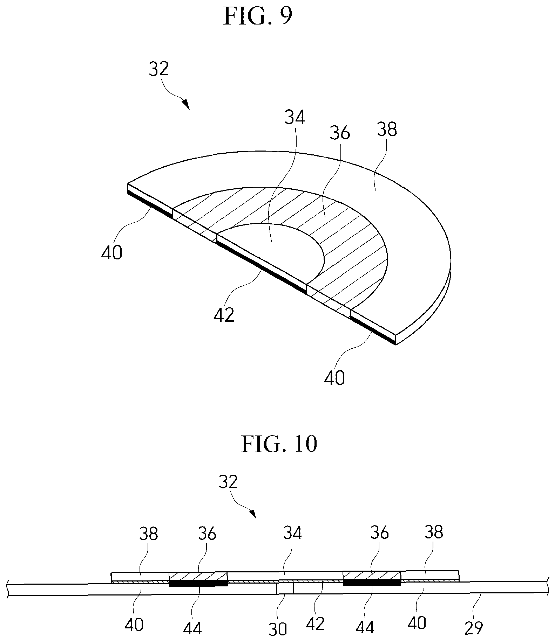

FIGS. 8 and 9 show a configuration of the injection hole sealing member 32 according to some embodiments, in which FIG. 8 is a perspective view of the exterior and FIG. 9 is a partial cross-sectional view.

In the present embodiment, the injection hole sealing member 32 may be manufactured in a substantially circular sheet shape and may include a first adhesive part 34 adhered to a battery can in an adjacent area including the injection hole 30. The first adhesive part 34 can be easily adhered to the battery can by an adhesive layer 42 formed on a surface facing the battery can. The injection hole 30 may be primarily sealed by the first adhesive part 34. The first adhesive part 34 may be formed of a heat-resistant material.

The injection hole sealing member 32 may further include a first welding part 36 in an area surrounding the first adhesive part 34 to further increase the sealing property of the injection hole 30. The first welding part 36 may be formed of a material (e.g., steel stainless or aluminum) that may be welded to the battery can. The first welding part 36 may be welded to the battery can using an ultrasonic welder but the welding method may vary. For example, the first welding part 36 may be welded using laser welding or another welding method. The sealing property of the injection hole 30 may be further increased (secondary sealing) by welding the first welding part 36.

The injection hole sealing member 32 may further include a second adhesive part 38 adhered to the battery can in an area surrounding the first welding part 36 to further increase the sealing property of the injection hole 30. The second adhesive part 38 can be easily adhered to the battery can by an adhesive layer 40 formed on the surface facing the battery can. The injection hole 30 may be tertiarily sealed by the second adhesive part 38. The second adhesive part 38 may be formed of a heat-resistant material.

FIG. 10 is a cross-sectional view showing a state of sealing the injection hole 30 by adhering and welding the injection hole sealing member 32 to the second surface 29 of the battery can.

The first adhesive part 34 is adhered to the second surface 29 of the battery can by the adhesive layer 42 to block the injection hole 30 and perform primary sealing, and the area that surrounds the injection hole 30 is welded by the first welding part 36 to perform secondary sealing by a welding layer 44 formed together with the second surface 29 of the battery can. In addition, the second adhesive part 38 is adhered to the second surface 29 of the battery can by the adhesive layer 40 to block the injection hole 30 and perform tertiary sealing.

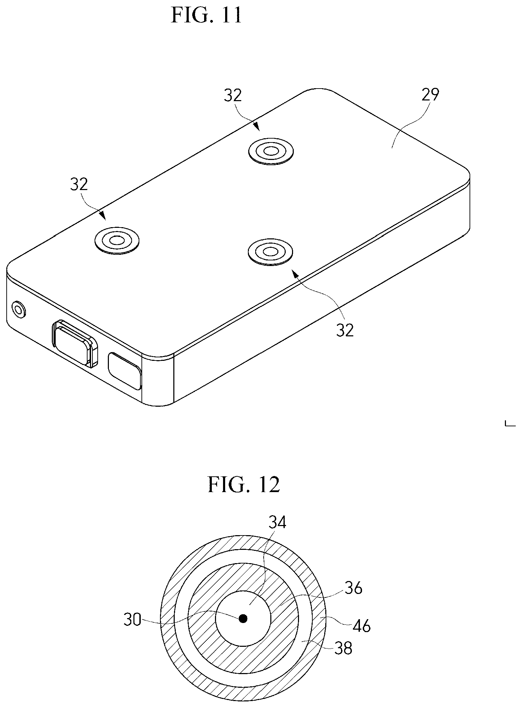

FIG. 11 shows an example that the injection hole sealing member 32 is applied to each injection hole 30 of the battery can having three injection holes 30 formed therein as shown in FIG. 6.

FIG. 12 shows an injection hole sealing member according to one or more other embodiments of the present disclosure. In addition to the injection hole sealing member 32 shown in FIG. 8, the second welding part 46 is included in an area surrounding the second adhesive part 38 to further increase the sealing property of the injection hole 30. The second welding part 46 may be formed of a material (e.g., steel stainless or aluminum) that may be welded to the battery can. The second welding part 46 may be welded to the battery can using an ultrasonic welder but the first welding part 36 may be welded using laser welding or another welding method. The sealing property of the injection hole 30 may be further increased by welding the second welding part 46 (quaternary sealing).

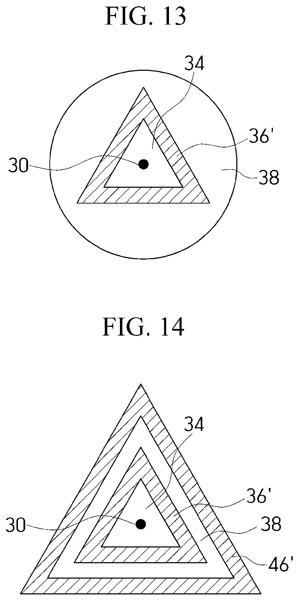

FIG. 13 shows an injection hole sealing member according to still another embodiment of the present disclosure. Unlike the circular injection hole sealing member 32 shown in FIG. 8, a first welding part 36' is formed in a triangle, and thus the first adhesive part 34 inside a boundary line of the triangle also has a triangle shape.

FIG. 14 shows an injection hole sealing member according to yet another embodiment of the present disclosure. A second welding part 46' is formed in a triangle on the injection hole sealing member 32 shown in FIG. 13, and thus the second adhesive part 38 inside a boundary line of the triangle also has a triangle shape.

The injection hole sealing member may have a shape other than the triangle as shown in FIGS. 13 and 14. For example, the injection hole sealing member may be manufactured in a quadrangular, pentagonal shape, or any shape.

A method of manufacturing the above-described secondary battery according to the present disclosure will be described.

The method of manufacturing the secondary battery according to one or more embodiments of the present disclosure includes providing an electrode assembly including a plurality of electrode plates, providing a battery can that includes a first surface corresponding to (e.g., aligning with) a side portion of the electrode assembly and a second surface corresponding to an electrode plate surface of the electrode assembly has at least one injection hole formed in the second surface, assembling the electrode assembly with the battery can and injecting an electrolyte through the injection hole, and sealing the injection hole using an injection hole sealing member.

In some embodiments, the sealing of the injection hole using the injection hole sealing member may include adhering a first adhesive part to the battery can in an area including the injection hole, and welding a first welding part to the battery can in an area surrounding the first adhesive part. The first welding part may be welded to the battery can by ultrasonic welding.

In some embodiments, the sealing of the injection hole using the injection hole sealing member may further include adhering a second adhesive part to the battery can in an area surrounding the first welding part.

In some embodiments, the sealing of the injection hole using the injection hole sealing member may further include welding a second welding part to the battery can in an area surrounding the second adhesive part. The second welding part may be welded to the battery can by ultrasonic welding.

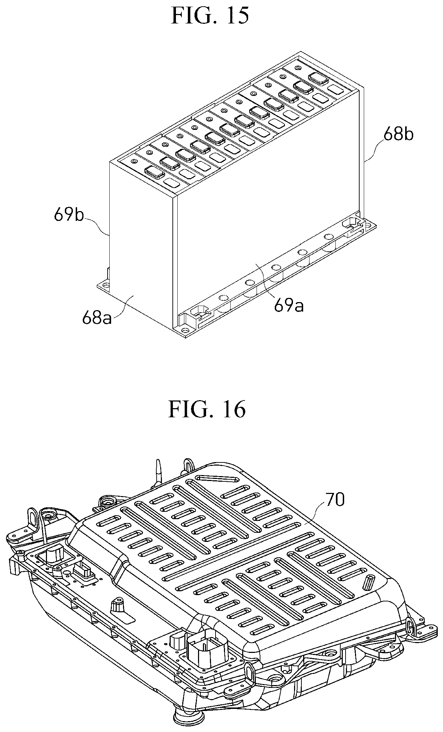

FIG. 15 is an example view of a secondary battery module in which secondary batteries manufactured by adopting the teaching of the present disclosure, in which the above-described injection hole(s) are formed, are arranged. With the high capacity of secondary batteries for driving electric vehicles or the like, a secondary battery module is manufactured by arranging and connecting a plurality of secondary battery cells in a transverse direction and/or a longitudinal direction. The plurality of secondary batteries may be arranged in a space defined by a pair of facing end plates 68a and 68b and a pair of facing side plates 69a and 69b. The arrangement of the secondary battery may be designed to have an arrangement direction and number to obtain the desired voltage and current specifications.

FIG. 16 is an example view of a secondary battery pack 70 formed to apply the secondary battery module shown in FIG. 15 to an actual product (e.g., a vehicle). The battery pack 70 may include an assembly to which individual batteries are electrically connected and a pack housing accommodating the same. In FIG. 16, for convenience of illustration, components including a bus bar, a cooling unit, external terminals for electrically connecting batteries, etc., are omitted.

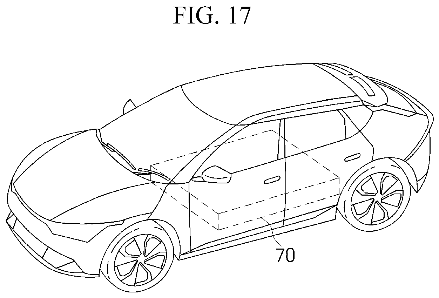

The secondary battery pack may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but could take other forms. FIG. 17 shows a vehicle that includes the battery pack 70 according to one or more embodiments of the present disclosure on the lower body thereof. The vehicle V may operate by (e.g., may be powered by) receiving power from the battery pack 70.

The present disclosure is directed to providing a secondary battery which are improved so that an electrolyte injected into a secondary battery can quickly reach an electrode assembly and is uniformly impregnated between electrode plates, and a manufacturing method thereof.

According to a secondary battery of the present disclosure, it is possible to shorten an impregnation path of an electrolyte injected into a secondary battery can so that the electrolyte can quickly reach an electrode assembly and can be uniformly impregnated between electrode plates.

In addition, since an injection hole sealing member can perform sealing of an injection hole in multiple stages, it is possible to significantly increase sealability.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
1. A secondary battery, comprising:
   an electrode assembly comprising a plurality of electrode plates;
   a battery can accommodating the electrode assembly, the battery can having a first surface corresponding to a side portion of the electrode assembly and a second surface corresponding to a surface of one of the plurality of electrode plates of the electrode assembly; and
   at least one injection hole in the second surface of the battery can.
2. The secondary battery according to clause 1, wherein:
   the first surface of the battery can is a narrow surface compared to a second surface, and
   the second surface of the battery can is a wide surface compared to the first surface.
3. The secondary battery according to clause 1 or 2, wherein the battery can includes a stainless steel (SUS) material.
4. The secondary battery according to clause 1, 2 or 3, wherein a thickness of at least the second surface of the battery can ranges from 0.1 mm to 1 mm.
5. The secondary battery according to any preceding clause, wherein a diameter of the at least one injection hole is 50 µm or less.
6. The secondary battery according to any preceding clause, further comprising an injection hole sealing member including a first adhesive part adhered to the battery can in an area comprising the injection hole, the sealing member sealing the injection hole.
7. The secondary battery according to clause 6, wherein the injection hole sealing member comprises a first welding part welded to the battery can in an area surrounding the first adhesive part.
8. The secondary battery according to clause 7, wherein the injection hole sealing member further comprises a second adhesive part adhered to the battery can in an area surrounding the first welding part.
9. The secondary battery according to clause 8, wherein the injection hole sealing member further comprises a second welding part welded to the battery can in an area surrounding the second adhesive part.
10. The secondary battery according to clause 7, 8 or 9, wherein:
   the first adhesive part of the injection hole sealing member includes a heat-resistant material, the first adhesive part having an adhesive surface adhered to the battery can, and
   the first welding part of the injection hole sealing member includes a metal material welded to the battery can.
11. The secondary battery according to any one of clauses 7 to 10, wherein the first welding part of the injection hole sealing member is welded to the battery can by ultrasonic welding.
12. A method of manufacturing a secondary battery, the method comprising:
   providing an electrode assembly comprising a plurality of electrode plates;
   providing a battery can having a first surface corresponding to a side portion of the electrode assembly and a second surface corresponding to a surface of the electrode plate of the electrode assembly and having at least one injection hole formed in the second surface;
   assembling the electrode assembly with the battery can and injecting an electrolyte through the injection hole; and
   sealing the injection hole using an injection hole sealing member.
13. The method according to clause 12, wherein sealing the injection hole using the injection hole sealing member comprises:
   adhering a first adhesive part to the battery can in an area comprising the injection hole; and
   welding a first welding part to the battery can in an area surrounding the first adhesive part.
14. The method according to clause 13, wherein sealing the injection hole using the injection hole sealing member further comprises adhering a second adhesive part to the battery can in an area surrounding the first welding part.
15. The method according to clause 14, wherein sealing the injection hole using the injection hole sealing member further comprises welding a second welding part to the battery can in an area surrounding the second adhesive part.

## Claims

1. A secondary battery, comprising:
an electrode assembly comprising a plurality of electrode plates;
a battery can accommodating the electrode assembly, the battery can having a first surface corresponding to a side portion of the electrode assembly and a second surface corresponding to a surface of one of the plurality of electrode plates of the electrode assembly; and
at least one injection hole in the second surface of the battery can.

2. The secondary battery as claimed in claim 1, wherein:
the first surface of the battery can is a narrow surface compared to the second surface.

3. The secondary battery as claimed in claim 1 or 2, wherein the battery can includes a stainless steel (SUS) material.

4. The secondary battery as claimed in claim 1, 2 or 3, wherein a thickness of at least the second surface of the battery can ranges from 0.1 mm to 1 mm.

5. The secondary battery as claimed in any preceding claim, wherein a diameter of the at least one injection hole is 50 µm or less.

6. The secondary battery as claimed in any preceding claim, further comprising an injection hole sealing member including a first adhesive part adhered to the battery can in an area comprising the injection hole, the sealing member sealing the injection hole.

7. The secondary battery as claimed in claim 6, wherein the injection hole sealing member comprises a first welding part welded to the battery can in an area surrounding the first adhesive part.

8. The secondary battery as claimed in claim 7, wherein the injection hole sealing member further comprises a second adhesive part adhered to the battery can in an area surrounding the first welding part.

9. The secondary battery as claimed in claim 8, wherein the injection hole sealing member further comprises a second welding part welded to the battery can in an area surrounding the second adhesive part.

10. The secondary battery as claimed in claim 7, 8 or 9, wherein:
the first adhesive part of the injection hole sealing member includes a heat-resistant material, the first adhesive part having an adhesive surface adhered to the battery can, and
the first welding part of the injection hole sealing member includes a metal material welded to the battery can.

11. The secondary battery as claimed in any one of claims 7 to 10, wherein the first welding part of the injection hole sealing member is welded to the battery can by ultrasonic welding.

12. A method of manufacturing a secondary battery, the method comprising:
providing an electrode assembly comprising a plurality of electrode plates;
providing a battery can having a first surface corresponding to a side portion of the electrode assembly and a second surface corresponding to a surface of one of the plurality of electrode plates of the electrode assembly and having at least one injection hole formed in the second surface;
assembling the electrode assembly with the battery can and injecting an electrolyte through the injection hole; and
sealing the injection hole using an injection hole sealing member.

13. The method as claimed in claim 12, wherein sealing the injection hole using the injection hole sealing member comprises:
adhering a first adhesive part to the battery can in an area comprising the injection hole; and
welding a first welding part to the battery can in an area surrounding the first adhesive part.

14. The method as claimed in claim 13, wherein sealing the injection hole using the injection hole sealing member further comprises adhering a second adhesive part to the battery can in an area surrounding the first welding part.

15. The method as claimed in claim 14, wherein sealing the injection hole using the injection hole sealing member further comprises welding a second welding part to the battery can in an area surrounding the second adhesive part.
